# EUROPÄISCHE PATENTSCHRIFT

(11) **EP 1 966 342 B1**
(45) Veröffentlichungstag und Bekanntmachung des Hinweises auf die Patenterteilung: **22.02.2012**
(21) Anmeldenummer: 06829452.9
(22) Anmeldetag: 08.12.2006
(51) Int. Cl.: C09K 9/00, G02B 1/04, G03C 1/73

(54) **PHOTOCHROMER KUNSTSTOFFGEGENSTAND**
PHOTOCHROMIC PLASTIC OBJECT
OBJET EN PLASTIQUE PHOTOCHROMIQUE

(30) Priorität: 12.12.2005 DE 102005059716
(43) Veröffentlichungstag der Anmeldung: 10.09.2008
(73) Patentinhaber: Rodenstock GmbH, 80469 München (DE)
(72) Erfinder: ROHLFING, Yven, 81547 München (DE); WEIGAND, Udo, 80638 München (DE); MELZIG, Manfred, 82234 Wessling (DE)
(74) Vertreter: Müller-Boré & Partner Patentanwälte
(86) Internationale Anmeldenummer: PCT/EP2006/011858
(87) Internationale Veröffentlichungsnummer: WO 2007/068410

(56) Entgegenhaltungen:
- WOHRLE, DIETER; SCHOMBURG, CARSTEN; ROHLFING, YVEN; WARK, MICHAEL; SCHULZ-EKLOFF, GUENTER: "In situ synthesis of azo dyes and spiropyran dyes in faujasites and their photochromic properties" HOST-GUEST-SYSTEMS BASED ON NANOPOROUS CRYSTALS (2003), 2003, Seiten 29-43, XP009084113 Weinheim, Germany
- L. B. MCCUSKER, F. LIEBAU, G. ENGELHARDT: "Nomenclature of structural and compositional characteristics of ordered microporous and mesoporous materials with inorganic hosts", PURE AND APPLIED CHEMISTRY, vol. 73, no. 2, 2001, pages 381-394,
- J. S. BECK ET AL.: "A new family of mesoporous molecular sieves prepared with liquid crystal templates", JOURNAL AMERICAN CHEMICAL SOCIETY, vol. 114, 1992, pages 10834-10843,

## Beschreibung

Die vorliegende Erfindung betrifft einen photochromen Kunststoffgegenstand, aufgebaut aus einem transparenten polymeren Kunststoffmaterial, wobei mindestens eine im wesentlichen mesoporöse anorganische Wirtstruktur, die ein oder mehrere organische photochrome Farbstoffmoleküle eingelagert aufweist, unter Bildung eines photochromen Nanokompositmaterials darin eingebracht oder darauf aufgebracht ist. Im Gegensatz zu im Stand der Technik verfügbaren Ansätzen werden gemäß der vorliegenden Erfindung photochrome organische Farbstoffe nicht in molekularer Form dem Monomergemisch/Präpolymeren des Kunststoffglases zugegeben, sondern es werden photochrome Nanokompositpartikel bzw. photochrome Nanokompositstrukturen zur Erzeugung der Farbigkeit angewendet.

Photochrome Kunststoffgegenstände im allgemeinen und phototrope Brillengläser aus Kunststoff im speziellen können unter Einsatz photochromer organischer Farbstoffe hergestellt werden. Die Farbstoffe für phototrope Brillengläser müssen verschiedene Vorgaben erfüllen: (i) hohe Extinktionskoeffizienten, (ii) Lichtbeständigkeit/hohe Lebensdauer, (iii) kontrollierbarer Farbverlauf bei Eindunkelung und Aufhellung, (iv) gute kinetische Eigenschaften in Eindunkelung und Aufhellung bei unterschiedlichen Temperaturen sowie (v) Verträglichkeit mit dem Polymersubstrat. Diese Vorgaben werden insbesondere von Verbindungen aus der Substanzklasse der Pyrane, insbesondere Naphthopyranen und von diesen abgeleiteten, größeren Ringsystemen, erfüllt. Für den Einsatz in ophthalmischen Gläsern sind Spirooxazin- und Spiropyranfarbstoffe, die bis in die zweite Hälfte der 90er Jahre Stand der Technik waren, ebenfalls geeignet.

Das Färben von transparentem Kunstoff für die Verwendung als Brillenglas erfolgt industriell auf unterschiedliche Weise: (i) durch Massefärbung, wobei vor der Polymerisation dem Monomergemisch Farbstoff zugegeben wird, (ii) durch Aufbringen einer photochromen dünnen Schicht, wobei das Substrat mittels *spin coating, dip coating etc.* oder dem Kleben einer Folie mit einer nach Verfahren (i) erzeugten Funktionsschicht versehen wird, oder (iii) durch Oberflächenfärbung, wobei das Färben durch Thermodiffusion der photochromen Farbstoffe in den Kunstoffgegenstand erfolgt.

Die Farbstoffmoleküle werden also chemisch und physikalisch in einer neuen Umgebung - einer Matrix - beeinflußt und müssen dieser angepaßt werden. Bei der Herstellung von Brillengläsern werden, bedingt durch Anforderungen an das Produkt und dessen Verwendungszweck, unterschiedliche Kunststoffe und Polymerkompositionen verwendet. Die ausgehärteten Polymere unterscheiden sich in Brechungsindex, Härte, Schlagzähigkeit, Gewicht, *etc*.

Ein Wechsel der Polymermatrix kann negative Auswirkungen auf das photochrome Verhalten des organischen Farbstoffes haben und dadurch erhebliche Anstrengungen in Forschung und Entwicklung nach sich ziehen oder sogar den kommerziellen Einsatz der Farbstoffklasse verhindern. In DE 198 52 680 wird daher daraufhingewiesen, daß eine vergleichende Untersuchung von Farbstoffen nur in gleicher Matrix erfolgen kann.

Farbstoff und umgebende Matrix sind Teile des photochromen Systems und können insofern nicht unabhängig voneinander betrachtet werden. Die photochromen Eigenschaften werden zum einen durch die Wahl der Farbstoffklasse und Substituierung deren Grundgerüstes und zum anderen durch die umgebende Matrix gesteuert. Wenn es gelingt, die Farbstoffe unabhängig von den Matrixeffekten des Kunststoffmaterials der ophthalmischen Gläser zu machen, gelten die vorstehenden Einschränkungen nicht mehr. Ein Ansatz, diese vorstehenden Einschränkungen aufzuheben, ist in EP 1 099 743 A1 beschrieben worden. Darin wird eine "Schutzhülle" für das Isomeriezentrum des ringöffnenden Farbstoffes beschrieben, welche in molekularer Dimension angepaßt ist.

Der vorliegenden Erfindung liegt somit die Aufgabe zugrunde, photochrome Kunststoffgegenstände bereitzustellen, deren photochrome Eigenschaften unabhängig vom verwendeten Kunststoffsubstrat kontrolliert werden können. Dabei sollen auch bisher nur über das aufwendige Verfahren (ii) nutzbare Kunststoffe (z. B. Polycarbonat) zugänglich gemacht werden.

Diese Aufgabe wird durch Bereitstellen der in den Ansprüchen gekennzeichneten Ausführungsformen gelöst.

Insbesondere wird gemäß der vorliegenden Erfindung ein photochromer Kunststoffgegenstand für ophthalmische Zwecke, ausgewählt aus Gläsern für Brillen aller Art, einschließlich Sonnenbrillen, Schutzbrillen und Visiere für Helme, aufgebaut aus einem polymeren Kunststoffmaterial, wobei mindestens eine anorganische Wirtstruktur, die ein oder mehrere organische photochrome Farbstoffmoleküle eingelagert aufweist, unter Bildung eines photochromen Nanokompositmaterials darin eingebracht oder darauf aufgebracht ist, wobei die Poren der Wirtstruktur, in der ein oder mehrere organische photochrome Farbstoffmoleküle eingelagert sind, einen Durchmesser von 1,5 bis 5 nm aufweisen, bereitgestellt.

Werden erfindungsgemäß entsprechende photochrome Farbstoffe in einem Material mit innerer Formgebung und Ordnung immobilisiert und dieses in der Form kleiner Partikel oder dünner Filme anstelle der Farbstoffmoleküle, wie im Stand der Technik beschrieben, eingesetzt, sind die photochromen Eigenschaften nur vom Einfluß des Wirtmaterials der Moleküle und nicht mehr vom Polymeren beeinflußt.

Das erfindungsgemäß vorgesehene photochrome Nanokompositmaterial kann dabei in Partikelform oder als strukturierte Schicht vorliegen.

Werden Partikel in ein Polymersubstrat eingelagert, enthält der Kunststoffgegenstand bevorzugt mehr als 1 Gew.-% Nanokomposit.

Wenn das photochrome Nanokompositmaterial als strukturierte Schicht vorliegt, sind Schichtdicken bis zu mehreren Mikrometern üblich.

Im Rahmen der vorliegenden Erfindung weisen die Poren der Wirtstruktur, in der ein oder mehrere organische photochrome Farbstoffmoleküle eingelagert sind, einen Durchmesser von 1,5 bis 5 nm auf.

Allgemein geläufig ist in diesem Zusammenhang der Fachausdruck Wirt-Gast-Material (*hosf-guest material*), wobei die sog. Wirtmatrix eine Textur in Form von Poren, Hohlräumen oder Kammern besitzt, die auch zwei- oder dreidimensional vernetzt sein können (D. Wöhrle, G. Schulz-Ekloff, Adv. Mater. 1994, 6, 875). Sowohl Dimension der eingelagerten molekularen Gäste als auch der umgebenden Wirtmatrix sind nanoskalig. Diese Systeme werden von Fachkundigen zu den Nanokompositmaterialien (*nanocomposite materials*) gerechnet (Chem. Mater. 2001, 13 (10)), wobei die anorganischen Wirtmaterialien auch als Molekularsiebe (*molecular sieves*) bezeichnet werden (D. Breck, Zeolite Molecular Sieves 1994, Wiley, London).

Die anorganische Wirtstruktur ist vorzugsweise ein geordnetes, anorganisches Material auf Basis von SiO₂, Al₂O₃, [*m*{Al₂O₃} · *n*(SiO₂}], TiO₂, ZnO, ZrO₂ oder anderen Metalloxiden sowie deren Mischoxiden sowie auf Basis von Aluminophosphaten. Die Metalloxidstruktur wird üblicherweise durch Polykondensation in Gegenwart amphiphiler Strukturbildner hergestellt. Die Wirtstruktur kann kristallin oder ferngeordnet mit amorphen Porenwänden sein. Die Porensysteme sind frei zugänglich und können verschiedene geometrische Ordnungen haben. Die Hohlraumstruktur der verwendeten Wirtmaterialien muß in der Lage sein, die Gastmoleküle ohne Zwang aufzunehmen. Man unterscheidet zwischen Mikroporen (< 2 nm), Mesoporen (≥ 2 nm, ≤ 50 nm) und Makroporen (≥ 50 nm) (IUPAC-Nomenklatur).

Mikroporöse Zeolithe - kristalline Aluminosilikate [m{Al₂O₃} · n{SiO₂}] - werden solgel-synthetisch unter Einsatz organischer Kationen hergestellt. Die Größe der Zeolithkäfige wird durch die Templatwirkung der Kationen beeinflußt. Durch *insitu*-Synthese von Spiropyranfarbstoffen im sog. Superkäfig (Durchmesser 1,3 nm) des Zeolithen Y (Faujasit, FAU) konnten zwar verschiedene photochrome Wirt-Gast-Materialien hergestellt werden (Wöhrle et al., "In Situ Synthesis of Azo Dyes and Spiropyran Dyes in Faujasites and their Photochromic Properties", HOST-GUEST-SYSTEMS BASED ON NANOPOROUS CRYSTALS (2003), Seiten 29-43, Weinheim, Germany). Diese Versuche haben jedoch gezeigt, daß bei fast identischem Hohlraum und Gastgröße der bereits in den 60er Jahren beschriebene Käfigeffekt zur Stabilisierung der farblosen und farbigen Isomere führt. Die eingedunkelten Nanokomposite hellen erst unter starker Bestrahlung mit sichtbarem Licht auf und sind daher gemäß der vorliegenden Erfindung nicht nutzbar.

Naphthopyranfarbstoffe aus beispielsweise den Gruppen der *h*-annellierten Benzo[*f*]chromene, wie beispielsweise in WO 2006/045495 A1 offenbart, oder Spirofluorenopyrane (vgl. US 6,225,466 bzw. US 6,331,625) erreichen in der Regel eine Größe von 15 - 20 Å. Um eine sterische Restriktion der Farbstoffe zu vermeiden, müssen die Hohlraumstrukturen des Wirtes größer sein als die des Gastes. Die Nanokompositmaterialien bzw. -partikel gemäß der vorliegenden Erfindung werden durch Einlagern der Farbstoffe in im wesentlichen mesoporöse Strukturen hergestellt, welche dann anschließend in das Polymer des Glases eingebracht oder auf dieses aufgebracht werden.

Seit 1992 ist es möglich, mesoporöse strukturierte Materialien mit frei zugänglichen Poren künstlich herzustellen (J. Beck et al., J. Am. Chem. Soc. 1992, 114, 10834). Dies wird durch den Einsatz von selbstorganisierenden Strukturbildnern, die größere Template bilden können, erreicht. Hierzu zählen anionische und kationische Tenside, oligomere Verbindungen mit hydrophilen und lipophilen Abschnitten und andere selbstorganisierende, amphiphile Verbindungen. In einem koordinierten Prozeß werden um die Template durch Polykondensation amorphe Wandstrukturen aufgebaut (LCT-Mechanismus, *liquid crystal templating mechanism*)*.* Inzwischen beschreiben zahllose Schriften diese junge Substanzklasse. Bekannte Vertreter sind beispielsweise die MCM-Materialien und die SBA-Materialien. Ein Fachmann ist in der Lage, die Texturparameter und die Morphologie der Partikel zu steuern.

So können im Rahmen der vorliegenden Erfindung hier beispielhaft die Einlagerung von photochromen *h*-annellierten Benzo[*f*]chromenen in 30 -35 Å große Poren eines mesostrukturierten Silikates mit hexagonaler Ordnung (*p*6*mm*) und anschließendes Einbringen dieser Nanopartikel in Polymerglas angeführt werden. Beispielsweise kann auch verwandtes Material als Silikatstruktur mit kubischinnenzentriertem (*lm*3*m*) Porensystem, welches *h*-annellierte Benzo[*f*]chromene beinhaltet, auf einem entsprechenden Polymersubstrat erzeugt werden.

Darüberhinaus muß die Lichtdurchlässigkeit des Brillenglases gewährleistet sein. Bereits Partikel oder Hohlräume einer Größe von > 50 nm können dazu führen, daß Streuung des sichtbaren Lichtes zu Eintrübung führt. Bei Anpassung der Brechzahlen (*index matching*) von Nanopartikel und Polymersubstrat können auch größere Partikel oder Schichtstrukturen verwendet werden. Die erfindungsgemä-βen Kunststoffgegenstände beinhalten Nanopartikel mit enger Porengrößenverteilung ohne Makroporen. Die verwendeten Partikel werden in der für Transparenz notwendigen Größe hergestellt oder gegebenenfalls konfektioniert (z.B. mittels Zerkleinern, etc.).

Wie vorstehend ausgeführt, wird die Photochromie durch das chemische Umfeld des Farbstoffes stark beeinflusst. Im Rahmen der vorliegenden Erfindung ist daher auch eine chemische Modifizierung der inneren Oberfläche des porösen Nanopartikels vorgesehen, d.h. in einer Ausführungsform der vorliegenden Erfindung weist die poröse Wirtstruktur eine chemisch funktionalisierte Oberfläche auf. Das chemische Umfeld im Inneren eines porösen Metalloxides wird üblicherweise durch Hydroxygruppen bestimmt, die frei, über Wasserstoffatome verbrückt oder mit angelagerten Wassermolekülen vorliegen. Eine gezielte Funktionalisierung kann die Stabilisierung der Isomere des photochromen Gastes steuern. Funktionelle Gruppen zur Passivierung können beispielsweise Alkyl-, polyhalogenierte Alkyl- und verzweigte Alkylreste sein. Polare funktionelle Gruppen können beispielsweise Amino-, sekundäre und tertiäre Amino, Ammoniumhalogenid-, Mercapto-, Cyano- und Halogengruppen sein. Die Funktionalisierung kann üblicherweise über Silylierungsreagenzien (*precursors*), ausgewählt aus (i) einer Alkoxysilangruppe zur Verankerung, einem (CH₂)*ₙ*-Distanzstück mit *n* = 2 - 18 und der funktionellen Gruppe, (ii) funktionalisierten Halogensilanen, (iii) funktionalisierten Disilazanen, (iv) funktionalisierten Disiloxanen oder anderen kondensierbaren Reagenzien erfolgen. Die *precursors* formieren sich auf der Metalloxidoberfläche idealerweise zu einer vernetzten Monolage (SAM *self assembling monolayer*), die über O-Brücken mit der Oberfläche verbunden ist. Diese Vorgehensweise zur Funktionalisierung ist seit den frühen 90er Jahren Stand der Technik.

Mittels der Funktionalisierung kann bei geeigneter Substituierung der organischen Farbstoffe zur Diffusionskontrolle eine kovalente oder ionische Bindung der Gäste erfolgen (Y. Rohlfing et al., Stud. Surf. Sci. Catal. 2000, 129, 295). In einer weiteren Ausführungsform der vorliegenden Erfindung sind demgemäß die photochromen organischen Farbstoffe mittels kovalenter oder ionischer Bindung an die chemisch funktionalisierte Oberfläche der Wirtstruktur gebunden. Hierbei sind eine Anbindung über Peptidbindung oder Sulfonamidbindung bevorzugt.

Zur Vermeidung von Agglomeration und/oder Verbesserung der Materialeigenschaften des erfindungsgemäßen Kunststoffgegenstandes kann eine Vernetzung der Nanokompositpartikel im Kunststoffsubstrat durchgeführt werden. In einer weiteren Ausführungsform der vorliegenden Erfindung sind daher die Nanokompositpartikel mit dem polymeren Kunststoffmaterial unter Verwendung von polykondensierbaren Silylierungsreagenzien vernetzt. Dazu wird die äußere Oberfläche der Nanopartikel mit polymerisierbaren funktionellen Gruppen versehen. Die Funktionalisierung erfolgt wie vorstehend beschrieben mit Silylierungsreagenzien. Der derart modifizierte Nanopartikel kann als Co-Monomer in der Polymerisation des Kunststoffglases aufgefaßt werden. Einem Fachmann ist die Handhabung entsprechender Silane bekannt. Ein übliches System zur Vernetzung von Metalloxidpartikeln in Polyacrylaten ist beispielsweise: (a) ein Acroyloxysilan, (b) ein Glycidoxysilan und (c) Pentaerythritol zur Kreuzvernetzung.

Die im photochromen Kunststoffgegenstand enthaltenen organischen photochromen Farbstoffe unterliegen keiner spezifischen Beschränkung. Vorzugsweise sind die Farbstoffe aus den Verbindungsklassen der (i) 3*H*-Naphthopyranen und 2*H-*Naphthopyrane, einschließlich der von diesen abgeleiteten, größeren Ringsysteme, der (ii) Spirooxazinfarbstoffe, der (iii) Spiropyranfarbstoffe oder (iv) Gemischen davon ausgewählt.

Als transparentes Kunststoffmaterial, das insbesondere als Träger bzw. Matrix für die photochromen Nanokompositpartikel dient, enthält der erfindungsgemäße Kunststoffgegenstand ein oder mehrere Kunststoffmaterialien. Die verwendbaren Kunststoffmaterialien können die im Stand der Technik üblicherweise, insbesondere für ophthalmische Zwecke verwendbaren Kunststoffe sein. Beispielsweise kann das Kunststoffmaterial aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methyl-styrol, Polyvinylbutyral, Copoly(styrol-methylmethacrylat), Copoly(styrolacrylnitril) und Polymeren aus Bestandteilen der Gruppe, bestehend aus Polyol(allyl-carbonat)monomeren, polyfunktionalen Acrylat-, Methacrylat- oder Diethylenglykoldimethacrylatmonomeren, ethoxylierten Bisphenol-A-dimethacrylat-monomeren, Diisopropenylbenzolmonomeren, Ethylenglykolbismethacrylatmonomeren, Poly(ethylenglykol)bismethacrylatmonomeren, ethoxylierten Phenolmethacrylatmonomeren, alkoxylierten Polyalkoholacrylatmonomeren und Diallylidenpentaerythritmonomeren oder Gemischen davon, ausgewählt sein.

Insbesondere kann das Kunststoffmaterial ein festes, transparentes Homo- oder Copolymer sein, ausgewählt aus der Gruppe, bestehend aus Poly(methylmethacrylat), Poly(ethylenglykolbismethacrylat), poly(ethoxyliertem Bis-phenol-A-dimethacrylat), thermoplastischem Polycarbonat, Polyvinylacetat, Polyvinylbutyral, Polyurethan oder ein Polymer, ausgewählt aus den Bestandteilen der Gruppe, bestehend aus Diethylenglykolbis(allylcarbonat)monomeren, Diethylenglykoldimethacrylatmonomeren, ethoxylierten Phenolmethacrylatmonomeren, ethoxylierten Diisopropenylbenzolmonomeren und ethoxylierten Trimethylolpropantriacrylatmonomeren.

Der erfindungsgemäße photochrome Kunststoffgegenstand kann ferner eine oder mehrere die Kratzfestigkeit verbessernde Hartschichten aufweisen. Darüberhinaus können auch, vorzugsweise auf der dem Licht abgewandten Seite des Kunststoffgegenstands, ein oder mehrere herkömmliche Entspiegelungsschichten vorgesehen sein.

Die vorliegende Erfindung wird durch die nachstehenden, nicht-einschränkenden Beispiele weiter erläutert.

### Beispiele

Die Herstellung eines photochromen Kunststoffgegenstandes gemäß der Erfindung erfolgt in mehreren Schritten:

### Beispiel 1

### (i) Herstellung mesoporöser Nanopartikel mit 1-dimensionaler Porenordnung

5 L bidestilliertem Wasser wird auf 60 °C erhitzt. Unter Rühren wird 14 g Natriummetasilicat (Fa. ALDRICH, NR. 30,781-5) zugefügt. Es wird so lange bei 60 °C gerührt, bis die Lösung klar ist (ca. 1 h). Dann werden 15,8 g Cetyltrimethylammoniumbromid zugefügt. Wieder wird bei 60 °C gerührt, bis die Lösung klar ist. Das Rühren wird 2 h fortgesetzt. Dem Gemisch werden unter Rühren 17,8 g Natriumchlorid zugegeben. Nach Abwarten, bis sich das Salz vollständig gelöst hat, werden dann 12 mL Isopropylacetat zugegeben. Nach der Zugabe wird die Temperatur gehalten und 30 min intensiv gerührt.

Nach Beenden des Rührens wird die Temperatur für 3 d gehalten. In der Reaktionslösung haben sich Nanopartikel gebildet, die vollständig suspendieren. Eine Filtration mit herkömmlichen Methoden ist aufgrund der geringen Partikelgröße nicht möglich. Die Partikel werden durch mehrfaches Zentrifugieren bei 15.000 g separiert. Das erhaltene pastöse Material wird mehrfach in bidestilliertem Wasser aufgeschlämmt und die Suspension wiederum zentrifugiert.

Die Nanopartikel werden mit 1 °C/min auf 600 °C erhitzt. Es wird ein reinweißes, homogenes Pulver erhalten.

Das beispielhaft erzeugte mesoporöse Material hat ein Mesoporenvolumen *V*ₘₑₛ von 0,695 cm³/g, eine Gesamtoberfläche *S*ₜₒₜ von 1067 m²/g und eine innere Oberfläche *S*ₘₑₛ von 812 m²/g. Der Porendurchmesser *D*ₘₑₛ beträgt etwa 3,4 nm, der Durchmesser des Einzelpartikels *D*ₚₐᵣₜᵢₖₑₗ beträgt etwa 35 bis 40 nm.

### (ii) Modifizierung poröser Nanopartikel mit Alkoxyslan

Die porösen Nanopartikel aus Schritt (i) werden im Vakuum getrocknet und unter Inertgasatmosphäre jeweils in getrocknetem Dichlormethan suspendiert. Nach Zugabe von 5 mmol 3-Aminopropyltriethoxysilan/g Nanopartikeln wird die Suspension mehrere Stunden gerührt und gemäß Schritt (i) zentrifugiert. Es wird ein reinweißes, homogenes Pulver erhalten.

Das modifizierte mesoporöse Material hat ein Mesoporenvolumen *V*ₘₑₛ von 0,360 cm³/g, eine innere Oberfläche *S*ₘₑₛ von 541 m²/g. Der verringerte Porendurchmesser *D*ₘₑₛ beträgt etwa 2,7 nm.

### (iii) Sorption eines Naphthopyranfarbstoffes in porösen Nanopartikeln

Die porösen Nanopartikel aus Schritt (ii) werden im Vakuum getrocknet und jeweils unter Inertgasatmosphäre in getrocknetem Dichlormethan suspendiert. Nach Zugabe einer photochromen Spirofluorenopyranverbindung der nachstehenden Strukturformel **1**, wie in EP 0 987 260 B1 offenbart, 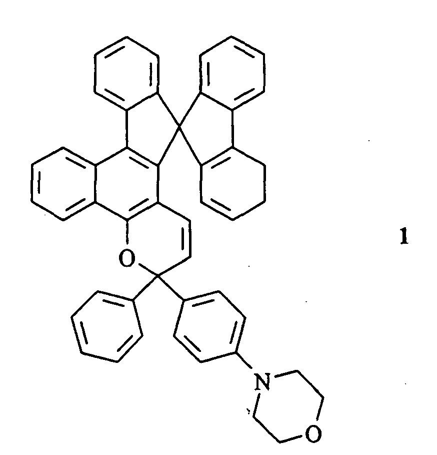 wird unter Inertgas gerührt bis der Farbstoff vollständig in Lösung ist. Die Sorption des Farbstoffes durch das Wirtmaterial äußert sich bereits in der Entfärbung des Gemisches. Das so erzeugte photochrome Nanokompositmaterial wird gemäß Schritt (i) zentrifugiert. Es wird ein blaugraues, homogenes Pulver erhalten.

### (iv) Herstellung eines photochromen Kunststoffgegenstandes aus Polyacrylat

Die erfindungsgemäßen Nanokompositmaterialien aus Schritt (iii) werden in der Monomerlösung des Acrylates unter Rühren suspendiert. Nach Zugabe eines Peroxidkatalysators wird das Gemisch in einer Gießform bei erhöhter Temperatur polymerisiert. Die Polymerisation wird nach dem Entformen bei 100 °C abgeschlossen.

### Beispiel 2

Die Durchführung erfolgt wie in Beispiel 1, mit dem Unterschied, daß die Modifizierung der Wirtstruktur (Schritt (ii)) entfällt.

### Beispiel 3

Die Durchführung erfolgt wie in Beispiel 1, mit den Unterschieden, daß anstelle von Natriumchlorid eine äquimolare Menge Ammoniumchlorid zugegeben wird (Schritt (i)) und daß die Modifizierung der Wirtstruktur (Schritt (ii)) entfällt.

Das mesoporöse Material aus Schritt (i) hat ein Mesoporenvolumen *V*ₘₑₛ von 0,478 cm³/g, eine Gesamtoberfläche *S*ₜₒₜ von 808 m²/g und eine innere Oberfläche *S*ₘₑₛ von 637 m²/g. Der Porendurchmesser *D*ₘₑₛ beträgt etwa 3,0 nm, der Durchmesser des Einzelpartikels *D*ₚₐᵣₜᵢₖₑₗ beträgt etwa 35 bis 40 nm.

### Beispiel 4

Die Durchführung erfolgt wie in Beispiel 2, mit dem Unterschied, daß im letzten Schritt ein photochromer Kunststoffgegenstand aus Polycarbonat hergestellt wird. Schritt (i) erfolgt analog Beispiel 1, (i), und Schritt (ii) erfolgt analog Beispiel 1, (iii).

### (iii) Polycarbonatgranulat wird in Dichlormethan gelöst. Der Lösung wird das Nanokompositmaterial aus Schritt (ii) zugeführt und unter Rühren homogen suspendiert. Das Gemisch wird in eine Form gegossen und zum Probenkörper ausgehärtet.

Die Strukturdaten wurden aus Stickstoffsorptionsisothermen ermittelt (gerät MICROMERITICS ASAP 2010, 80 Meßpunkte). Die Auswertungen der Meßdaten erfolgten mittels t-plot-Methode und BET-Methode. Die Partikelgrößen wurden mit Transmissionselektronenmikroskopie bestimmt (Gerät JEOL JSM-6700F).

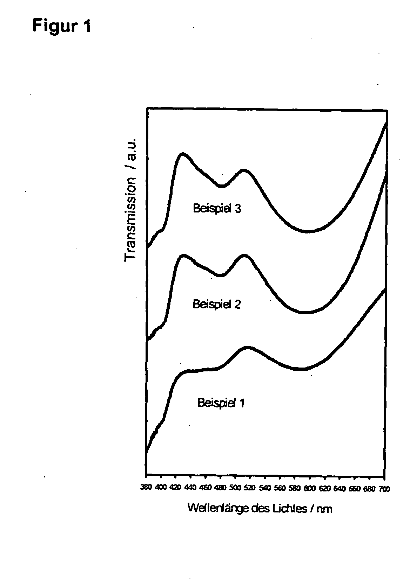

Figur 1 zeigt die Veränderung der Farbigkeit einer Spirofluorenopyranverbindung unter Einfluß der Änderung des als Matrix dienenden mesoporösen Materials (s. vorstehende Beispiele). Die Nanokompositpartikel sind in jeweils gleiches Kunststoffsubstrat eingebracht.

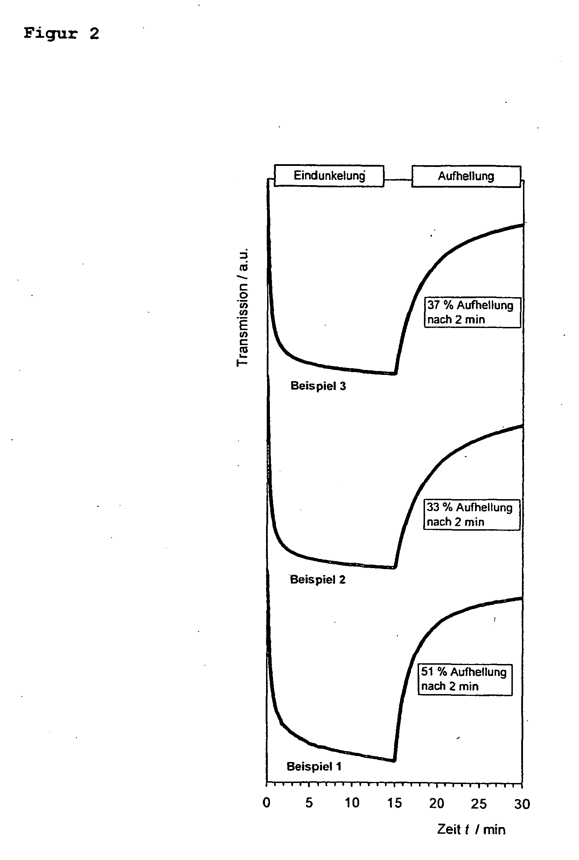

Figur 2 zeigt die Veränderung der kinetischen Eigenschaften der Spirofluorenopyranverbindung unter Einfluß der Änderung des als Matrix dienenden mesoporösen Materials in der Form eines Kinetikdiagrammes. Die in Figur 2 angegebenen Werte zur prozentualen Aufhellung beziehen sich auf die jeweilige Eindunkelung nach 15 minütiger Belichtung mit einer Xenonbogenlampe mit 50 klux.

Zur besseren Übersicht wurden die Spektren und Kinetikauftragungen auf den Ordinaten gegeneinander verschoben.

Wie in den Beispielen gezeigt, führt die gesteuerte Herstellung von porösen Nanopartikeln, gegebenenfalls in Kombination mit Methoden der Oberflächenmodifizierung, zu maßgeschneiderten Wirtstrukturen zur Einbettung in den jeweiligen Kunststoffsubstraten.

## Patentansprüche

1. Photochromer Kunststoffgegenstand für ophthalmische Zwecke, ausgewählt aus Gläsern für Brillen aller Art, einschließlich Sonnenbrillen, Schutzbrillen und Visiere für Helme, aufgebaut aus einem polymeren Kunststoffmaterial, wobei mindestens eine anorganische Wirtstruktur, die ein oder mehrere organische photochrome Farbstoffmoleküle eingelagert aufweist, unter Bildung eines photochromen Nanokompositmaterials darin eingebracht oder darauf aufgebracht ist, wobei die Poren der Wirtstruktur, in der ein oder mehrere organische photochrome Farbstoff moleküle eingelagert sind, einen Durchmesser von 1,5 bis 5 nm aufweisen.

2. Photochromer Kunststoffgegenstand nach Anspruch 1, wobei das Nanokompositmaterial in Partikelform oder als strukturierte Schicht vorliegt.

3. Photochromer Kunststoffgegenstand nach Anspruch 1 oder 2, wobei die poröse Wirtstruktur ein geordnetes, anorganisches Material auf Basis von SiO₂, Al₂O₃, [*m*{Al₂O₃} · *n*{SiO₂}], TiO₂, ZnO, ZrO₂ oder deren Mischoxiden oder von Aluminophosphaten ist.

4. Photochromer Kunststoffgegenstand nach einem der Ansprüche 1 bis 3, wobei die poröse Wirtstruktur eine chemisch funktionalisierte Oberfläche aufweist.

5. Photochromer Kunststoffgegenstand nach Anspruch 4, wobei die funktionellen Gruppen aus geradketttigen bzw. verzweigtkettigen Alkylgruppen, polyhalogenierten Alkylgruppen, primären, sekundären bzw. tertiären Aminogruppen, Ammoniumhalogenidgruppen, Mercapto-, Cyano- oder Halogengruppen ausgewählt sind.

6. Photochromer Kunststoffgegenstand nach einem der Ansprüche 1 bis 5, wobei die organischen photochromen Farbstoffe aus den Verbindungsklassen der (i) 3*H*-Naphthopyranen und 2*H*-Naphthopyrane, einschließlich der von diesen abgeleiteten, größeren Ringsysteme, der (ii) Spirooxazinfarbstoffe, der (iii) Spiropyranfarbstoffe oder (iv) Gemischen davon ausgewählt sind.

7. Photochromer Kunststoffgegenstand nach einem der Ansprüche 4 bis 6, wobei die photochromen organischen Farbstoffe mittels kovalenter oder ionischer Bindung an die chemisch funktionalisierte Oberfläche der Wirtstruktur gebunden sind.

8. Photochromer Kunststoffgegenstand nach einem der vorhergehenden Ansprüche, wobei die Nanokompositpartikel mit dem polymeren Kunststoffmaterial unter Verwendung von polykondensierbaren Silylierungsreagenzien vernetzt sind.

## Claims

1. Photochromic plastic object for ophthalmic purposes, selected from lenses for spectacles of all types including sunglasses, protective glasses and visors for helmets, made from a polymer plastic material, wherein at least one inorganic host structure having one or more organic photochromic dye molecules embedded in it is incorporated therein or applied thereto to form a photochromic nanocomposite material, wherein the pores of the host structure, in which one or more organic photochromic dye molecules are embedded, have a diameter of 1.5 to 5 nm.

2. Photochromic plastic object according to claim 1, wherein the nanocomposite material is present in particle form or as a structured layer.

3. Photochromic plastic object according to claim 1 or 2, wherein the porous host structure is a sequenced inorganic material based on SiO₂, Al₂O₃, [m{Al₂O₃} · n{SiO₂}], TiO₂, ZnO, ZrO₂ or mixed oxides thereof or on alumino-phosphates.

4. Photochromic plastic object according to one of claims 1 to 3, wherein the porous host structure has a chemically functionalised surface.

5. Photochromic plastic object according to claim 4, wherein the functional groups are selected from straight-chain or branched-chain alkyl groups, polyhalogenated alkyl groups, primary, secondary or tertiary amino groups, ammonium halide groups, mercapto-, cyano- or halogen groups.

6. Photochromic plastic object according to one of claims 1 to 5, wherein the organic photochromic dyes are selected from the binding classes of (i) 3H-naphthopyrans and 2H-naphthopyrans, including the larger ring systems derived from these, (ii) spirooxazine dyes, (iii) spiropyran dyes or (iv) mixtures thereof.

7. Photochromic plastic object according to one of claims 4 to 6, wherein the photochromic organic dyes are bonded to the chemically functionalised surface of the host structure by means of covalent or ionic bonding.

8. Photochromic plastic object according to one of the preceding claims, wherein the nanocomposite particles are cross-linked with the polymer plastic material using polycondensable silylation reagents.

## Revendications

1. Objet en matière synthétique photochromique, à des fins ophtalmiques, choisi parmi des verres pour des lunettes de tous types, y compris des lunettes de soleil, des lunettes de protection et des visières pour des casques, élaboré à partir d'une matière synthétique polymérique, où est incorporée ou rapportée sur sa surface au moins une structure incluse inorganique, qui présente implantée(s) une ou plusieurs molécules de colorant organique photochrome, avec formation d'un matériau nano composite photochrome, où les pores de la structure incluse, dans laquelle sont incorporées une ou plusieurs molécules de colorant photochrome, présentent un diamètre de 1,5 à 5 nm.

2. Objet en matière synthétique photochromique selon la revendication 1, où le matériau nano composite se présente sous la forme de particules ou d'une couche structurée.

3. Objet en matière synthétique photochromique selon les revendications 1 ou 2, dans lequel la structure incluse poreuse est un matériau inorganique, ordonné, sur la base de SiO₂, Al₂O₃, [m{Al₂O₃} n{SiO₂}], TiO₂, ZnO, ZrO₂ ou leurs oxydes mixtes ou des alumino-phosphates.

4. Objet en matière synthétique photochromique selon l'une des revendications de 1 à 3 où la structure incluse poreuse présente une surface fonctionnalisée chimiquement.

5. Objet en matière synthétique photochromique selon la revendication 4 où les groupes fonctionnels sont choisis parmi des groupes alkyles en chaîne linéaire, respectivement branchée, des groupes alkyles polyhalogénés, des groupes amines primaires, secondaires, respectivement tertiaires, des groupes halogénures d'ammonium, des groupes mercapto, cyano ou halogénés.

6. Objet en matière synthétique photochromique selon l'une des revendications de 1 à 5 où les colorants organiques photochromes sont choisis parmi les classes de combinaisons (i) 3H-naphtopyrannes et 2H-naphtopyrannes, y compris les systèmes cycliques plus grands qui en sont dérivés, (ii) des colorants de spiro oxazine, (iii) des colorants de spiropyranne ou (iv) des mélanges d'entre eux.

7. Objet en matière synthétique photochromique selon l'une des revendications de 4 à 6 où les colorants organiques photochromes sont reliés à la surface fonctionnalisée chimiquement de la structure incluse au moyen d'une liaison covalente ou ionique.

8. Objet en matière synthétique photochromique selon l'une des revendications précédentes, où les particules nano composites sont en réseau avec la matière synthétique polymérique grâce à l'emploi de réactifs de silylation polycondensables.
